# EUROPEAN PATENT APPLICATION

(11) **EP 2 030 754 A1**
(43) Date of publication of application: **04.03.2009**
(21) Application number: 07744925.4
(22) Date of filing: 08.06.2007
(51) Int. Cl.: B29C 45/14, B29C 33/42, B60J 1/00, B29L 31/30

(54) **PROCESS FOR PRODUCTION OF LONG MOLDINGS AND GLASS WITH MOLDING**

(30) Priority: 12.06.2006 JP 2006162680
(71) Applicant: Nippon Sheet Glass Company, Limited, Tokyo 108-6321 (JP)
(72) Inventor: FUKUSHIMA, Masanobu, Minato-ku, Tokyo 108-6321 (JP); NAKAGAWA, Kiyomi, Hofu-shi, Yamaguchi 747-0824 (JP)
(74) Representative: Intes, Didier Gérard André
(86) International application number: PCT/JP2007/061605
(87) International publication number: WO 2007/145138

(57) **Abstract**

An injection molding process for producing long moldings which is freed from short molding without enhancing the injection pressure. According to the molding process, a molten resin injected into a cavity (33) flows at a lowered flow rate in the interstice (34) between a protuberance (31) and a metal mold (22C) because the interstice (34) is narrower than the other part, while it flows sufficiently into the cavity (33) except the interstice (34) to adhere to a glass substrate (21) tightly. Further, the molten resin flows also into a lip-forming concavity (35) to form a lip having a high filling density.

## Description

### TECHNICAL FIELD

The present invention relates to a process for producing elongated moldings and glass with a molding suitable for use on vehicles.

### BACKGROUND ART

A glass with a molding in which a decoration referred to as a molding is attached to an edge or the like of plate glass is used in vehicles. An improved technique related to this type of vehicle molding is known from, e.g., Patent Document 1 (Japanese Patent Application Laid-Open Publication No. 09-020186; FIGS. 10 through 12).

A vehicle-use molding disclosed in Patent Document 1 will be described hereinafter with reference to FIGS. 7A through 7C hereof.

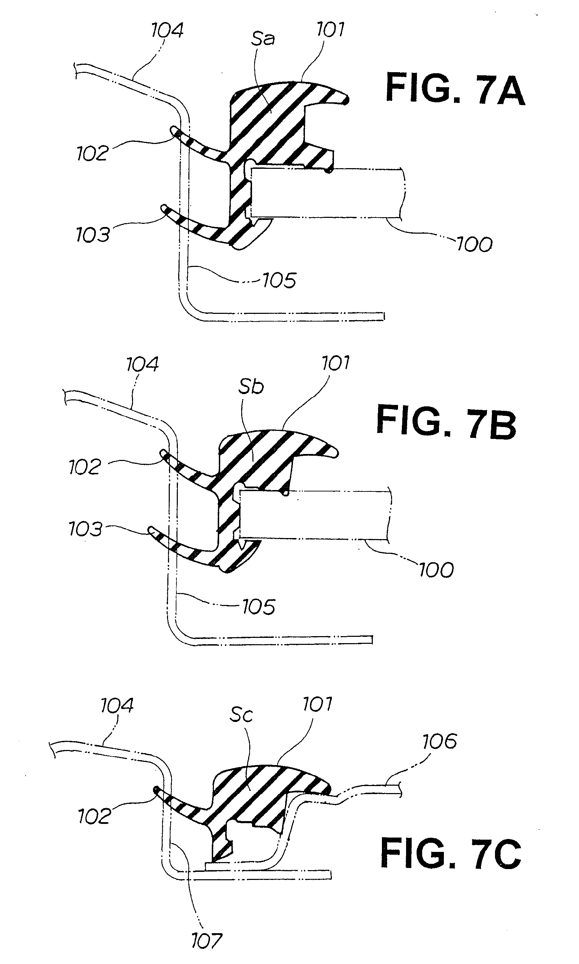

A resin molding 101 covers a windshield 100, as shown in FIG. 7A. A first lip 102 and a second lip 103 extending from the resin molding 101 contact a wall section 105 of a roof-side panel 104. The first lip 102 and the second lip 103 undergo an elastic deformation in a clockwise direction in FIG. 7A, and therefore adhere to the wall section 105 when a counterclockwise return is attempted.

The resin molding 101 has a first lip 102 and a second lip 103 in FIG. 7B as well. The first lip 102 and the second lip 103 undergo an elastic deformation in a clockwise direction in FIG. 7B, and therefore adhere to the wall section 105 when a counterclockwise return is attempted.

In FIG. 7C, a resin molding 101 fits in joining concavity 107 between a roof-side panel 104 and a rooftop panel 106, and the resin molding 101 has only a first lip 102.

It is apparent from the drawings that Sc < Sb < Sa, where Sa is the cross-sectional area of the resin molding 101 in FIG. 7A, Sb is the cross-sectional area of the resin molding 101 in FIG. 7B, and Sc is the cross-sectional area of the resin molding 101 in FIG. 7C.

FIGS. 7A, 7B, and 7C are cross-sectional views taken at a point in a longitudinal direction of the elongated resin molding 101 at a site in the longitudinal direction, and the resin is sequentially injection-molded using an injection molding method. During such injection molding, incomplete filling (including insufficient density) occurs in the second lip 103, 103 in FIGS. 7A and 7B. In other words, the resin is not filled sufficiently all the way to the distal end of the second lip 103, 103.

Injection molding pressure can be increased as a countermeasure, but the metal mold must be strengthened to withstand the increased pressure, and the metal mold becomes more expensive.

Many moldings for vehicles are elongated moldings in which the cross-sectional area is made different at different sites in the longitudinal direction due to design requirements. It is desirable that the problem of incomplete resin filling could be solved without raising the injection pressure.

### DISCLOSURE OF THE INVENTION

### (Problem to Be Solved by the Invention)

It is therefore an object of the present invention to provide a technique that can solve incomplete resin filling without raising the injection pressure.

### (Means to Solve the Problem)

According to one aspect of the present invention, there is provided a process for producing elongated moldings by injection molding, which method comprises the steps of: forming a cavity using a first mold and a second mold, narrowing one portion of the cavity more than other portions of the cavity; and injecting molten resin into the cavity.

Preferably, the process further includes, before the cavity forming step, the step of setting a metal molding on top of the first mold, wherein, in the cavity forming step, the cavity is formed in an area that includes the metal molding by laying the second mold on top of the first mold in which the metal molding is set.

Desirably, the step for narrowing one portion of the cavity is performed using the second mold having a protuberance that extends toward the metal molding.

In a preferred form, the elongated molding comprises a molding having a variable cross-sectional area.

It is preferable that the step for narrowing one portion of the cavity be performed on a portion having a large cross-sectional area in the elongated molding having a variable cross-sectional area.

According to another aspect of the present invention, there is provided a process for producing elongated moldings having a variable cross-sectional area by injection molding, which method comprises the steps of: setting a metal molding on a first mold; laying a second mold on the first mold and forming a cavity by the first mold and the second mold in an area that includes the metal molding; narrowing one portion of the cavity formed between the second mold and the metal molding more than other portions of the cavity; and injecting molten resin into the cavity.

Preferably, the step of narrowing one portion of the cavity is performed by using the second mold provided with a protuberance that extends toward the metal molding.

Desirably, the step of narrowing one portion of the cavity is performed on a portion having a large cross-sectional area in the elongated molding having a variable cross-sectional area.

According to yet another aspect of the present invention, there is provided a glass with a molding, which comprises: a glass base material; and a resin molding formed by injection molding on a peripheral edge of the glass base material, wherein the resin molding is an elongated molding having a variable cross-sectional area, a molding portion having a large cross-sectional area in the elongated molding has a concavely formed indented part, and a molding portion corresponding to the indented part is thinner than other molded portions.

Preferably, the elongated molding comprises a resin molding with a metal molding obtained by injecting molten resin into a cavity formed by laying a second mold on a first mold in which a metal molding is set in advance. The indented part may be formed in the part of the molding on an opposite side from the metal molding.

### (Advantages Achieved by the Invention)

According to the process of the present invention, one portion of the cavity is made narrower than other cavity portions, and resistance to the resin flow therefore increases when molten resin is injected into the cavity. Proportionally more molten resin is allowed to flow in portions other than the narrow cavity without the need to substantially raise the injection pressure, the molten resin flows across to all corners of the cavity, and incomplete filling of the molten resin can be prevented.

Narrowing part of the cavity in a portion having a large cross-sectional area in the elongated molding having a varying cross-sectional area makes it possible to make the molding in that portion thinner and to obtain an elongated molding having a reduced weight overall.

In the glass with a molding, the weight of the resin molding is reduced by the formation of an indented part, and the glass with a molding can be made more lightweight.

### BRIEF DESCRIPTION OF THE DRAWINGS

FIG. 1 is a perspective view of a vehicle that has glass with a molding according to the present invention;
FIG. 2 is a view showing a portion of the glass with a molding of FIG. 1;
FIG. 3 is a cross-sectional view taken along line 3-3 of FIG. 2;
FIG. 4 is a cross-sectional view taken along line 4-4 of FIG. 2;
FIG. 5 is a cross-sectional view taken along line 5-5 of FIG. 2;
FIG. 6 is a view illustrating an injection molding method;
FIG. 7A is a view illustrating a first basic configuration of the prior art;
FIG. 7B is a view illustrating a second basic configuration of the prior art; and
FIG. 7C is a view illustrating a third basic configuration of the prior art.

### (Description of Reference Numerals)

- 10:: vehicle
- 11:: vehicle body
- 20:: glass with a molding
- 21:: glass base material
- 22,: 22A, 22B, 22C: metal molding
- 23,: 23A, 23B, 23C: resin molding
- 25:: lip
- 26B, 26C:: indented part
- 31:: protuberance provided to a metal mold for forming the indented part
- 33:: cavity

### BEST MODE FOR CARRYING OUT THE INVENTION

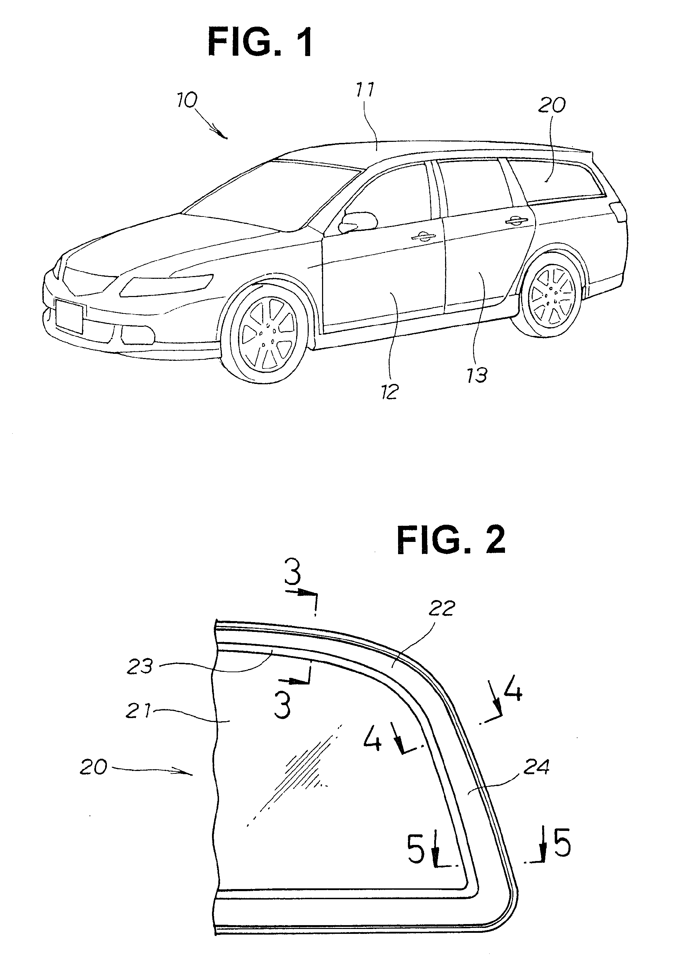

The vehicle 10 shown in FIG. 1 is a four-door wagon that has a front door 12 and a rear door 13 in the vehicle body 11, and also has, e.g., glass with a molding 20 of the present invention rearward of the rear door 13.

In the glass with a molding 20 shown in FIG. 2, a resin molding 24 with a metal molding composed of a metal molding 22 and a resin molding 23 is disposed on an edge of a glass base material 21. The resin molding 24 with a metal molding has a width that varies depending on the site. Cross-sectional views of representative sites will be described hereinafter.

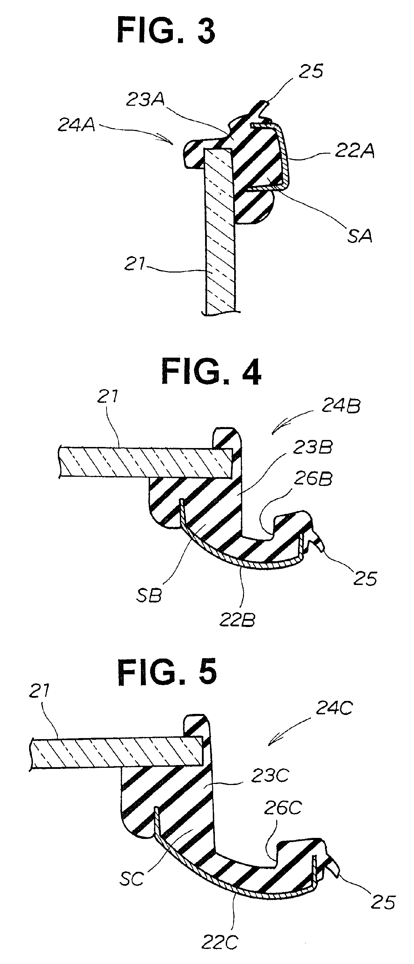

The resin molding 24A with a metal molding (the letter A is attached to the reference numeral 24 for purposes of comparison; same below) at the site shown in FIG. 3 is composed of a metal molding 22A having a U-shaped cross section in the form of a narrow web, a resin molding 23A having a substantial cross-sectional area, and a lip 25 extending from the resin molding 23A. The cross-sectional area of the resin molding 23A is referred to as SA.

The resin molding 24B with a metal molding (the letter B is attached to the reference numeral 24 for purposes of comparison; same below) at the site shown in FIG. 4 is composed of a metal molding 22B having a U-shaped cross section in the form of a somewhat wide web, a resin molding 23B having a somewhat large cross-sectional area, a lip 25 extending from the resin molding 23B, and a concave indented part 26B provided on the back of the resin molding 23B. The cross-sectional area of the resin molding 23B is referred to as SB.

The resin molding 24C with a metal molding (the letter C is attached to the reference numeral 24 for purposes of comparison; same below) at the site shown in FIG. 5 is composed of a metal molding 22C having a U-shaped cross section in the form of a sufficiently wide web, a resin molding 23C having a large cross-sectional area, a lip 25 extending from the resin molding 23C, and an indented part 26C of a large cross section provided on the back of the resin molding 23C. The cross-sectional area of the resin molding 23C is referred to as SC.

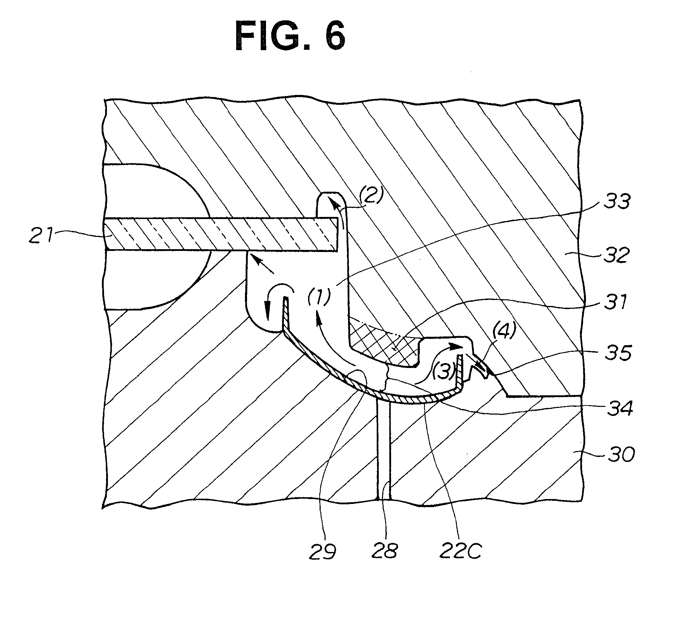

FIG. 6 is a schematic view of an injection molding method performed by providing a first mold 30 having a vacuum hole 28 and a metal molding mounting portion 29, and a second mold 32 having a protuberance 31 for molding the indented p art.

A metal molding 22C is set and a glass base material 21 is mounted in the first mold 30. The second mold 32 is next laid over to form a cavity 33.

A vacuum is next formed in the vacuum hole 28, whereby the metal molding 22C is caused to adhere to the first mold 30. Molten resin is subsequently injected into the cavity 33. The flow speed of the molten resin decreases because an interstice 34 between the protuberance 31 and the metal molding 22C is smaller than in other areas. The molten resin flows unimpeded around the glass base material 21, as shown by the arrows (1) and (2), on the left side of the interstice 34 in the drawing. The molten resin can adhere to the glass base material 21 by way of the flow shown by the arrows (1) and (2).

The molten resin flows into a lip-forming concavity 35, as shown by the arrows (3) and (4), on the right side of the interstice 34 in the drawing. A densely filled lip can be formed by way of the flow shown by the arrows (3) and (4).

In the absence of the indented parts 26B, 26C in FIGS. 4 and 5, the molten resin would flow freely along the back surface of the metal moldings 22B, 22C having minimal flow resistance. As a result, filling defects would occur in the lips 25, 25.

The indented part 26B is provided herein on the back of the metal molding 22B in FIG. 4 according to the present invention, and the densely filled lip 25 can therefore be formed. A large indented part 26C is provided to the back of the metal molding 22C in FIG. 5 as well, and the tightly filled lip 25 can therefore be formed.

In addition, part of the resin materials becomes unnecessary and the resin moldings 23B, 23C can be made more lightweight in an amount commensurate with the indented part 26B, 26C, as is apparent from the drawings. As a result, the glass with a molding 20 shown in FIG. 2 can be made lighter in weight.

Although resin filling defects can be substantially solved by approximating the shape of the molding to the cross-sectional areas SA, SB, SC, the site at which the indented parts 26B, 26C are positioned is also important. In other words, the adhesive strength between the glass base material 21 and the resin molding 23, and the filling density of the lip 25 are important for the glass with a molding 20 shown in FIG. 2. The resin on the back of the metal molding 22 is hardly required to be thick because the metal molding is the externally visible member and the metal molding 22 can be expected to be rigid.

In consideration of the above points, it is best that the indented parts 26B, 26C be placed at the back of the metal moldings 22B, 22C, and it is preferable that the indented parts 26B, 26C be provided in a state in which the parts open upward in the drawing at a site most distant from the metal moldings 22B, 22C, as shown in the drawings.

In other words, according to the present invention, the molten resin can flow across to all the corners in the cross section, and incomplete filling can be prevented. Injection pressure need not be raised substantially.

In the case of a resin molding with a metal molding, the molten resin flows easily on the back of the metal molding. When an indented part is provided on the back of the metal molding, the cavity at the back of the metal molding becomes narrow, and resistance to the resin flow increases. The flow of molten resin proportionally increases in areas other than the back of the metal molding, the molten resin can flow across to the distal corners in the cross section, and incomplete filling can be prevented.

The metal molds are not necessary in aspects 1 and 3. The site of the indented part is also arbitrary.

The method for injection molding elongated moldings according to the present invention can be applied to manufacturing solely resin moldings or resin moldings with a metal molding in addition to being applied to resin moldings or to resin moldings with a metal molding integrally formed along an edge of a glass base material.

### INDUSTRIAL APPLICABILITY

The present invention is suitable for glass with a molding used in vehicles.

## Claims

1. A process for producing elongated moldings by injection molding, comprising the steps of:
forming a cavity using a first mold and a second mold;
narrowing one portion of the cavity more than other portions of the cavity; and
injecting molten resin into the cavity.

2. The process for producing elongated moldings, according to claim 1, further comprising, prior to the cavity forming step, the step of setting a metal molding on top of the first mold, wherein, in the step for forming the cavity, the cavity is formed in an area that includes the metal molding by laying the second mold on top of the first mold in which the metal molding is set.

3. The process for producing elongated moldings, according to claim 2, wherein the step of narrowing one portion of the cavity is performed using the second mold provided with a protuberance that extends toward the metal molding.

4. The process for producing elongated moldings, according to claim 1, wherein the elongated molding comprises a molding having a variable cross-sectional area.

5. The process for producing elongated moldings, according to claim 4, wherein the step of narrowing one portion of the cavity is performed on a portion of large cross-sectional area of the variable cross-sectional area of the elongated molding.

6. A process for producing elongated moldings having a variable cross-sectional area by injection molding, comprising the steps of:
setting a metal molding on a first mold;
laying a second mold on the first mold and forming a cavity by the first mold and the second mold in an area that includes the metal molding;
narrowing one portion of the cavity formed between the second mold and the metal molding more than other portions of the cavity; and
injecting molten resin into the cavity.

7. The process for producing elongated moldings, according to claim 6, wherein the step of narrowing one portion of the cavity is performed using the second mold provided with a protuberance that extends toward the metal molding.

8. The process for producing elongated moldings, according to claim 6, wherein the step of narrowing one portion of the cavity is performed on a portion of large cross-sectional area of the variable cross-sectional area of the elongated molding.

9. A glass with a molding, comprising:
a glass base material; and
a resin molding formed by injection molding on a peripheral edge of the glass base material,
wherein the resin molding comprises an elongated molding having a variable cross-sectional area, the elongated molding has a portion of large cross-sectional area which has a concavely formed indented part, and a molding portion corresponding to the indented part is thinner than other molded portions.

10. The glass with a molding, according to claim 9, wherein the elongated molding comprises a resin molding with a metal molding obtained by injecting molten resin into a cavity formed by laying a second mold on a first mold in which a metal molding is set in advance, and the indented part is formed in the part of the molding on an opposite side from the metal molding.
